# EUROPÄISCHE PATENTANMELDUNG

(11) **EP 0 596 855 A1**
(43) Veröffentlichungstag der Anmeldung: **11.05.1994**
(21) Anmeldenummer: 93890209.5
(22) Anmeldetag: 25.10.1993
(51) Int. Cl.: F02B 37/00, F02M 25/07

(54) **Brennkraftmaschine mit Abgasturbolader**

(30) Priorität: 02.11.1992 AT 2165/92
(71) Anmelder: AVL Gesellschaft für Verbrennungskraftmaschinen und Messtechnik mbH.Prof.Dr.Dr.h.c. Hans List, A-8020 Graz (AT)
(72) Erfinder: Kriegler, Wolfgang, Dipl.-Ing., A-9470 St. Paul i. Lavanttal (AT); Cartellieri, Wolfgang, Dipl.-Ing., A-8047 Graz (AT)
(74) Vertreter: Krause, Walter, Dr. Dipl.-Ing.

(57) **Zusammenfassung**

Um bei einer Brennkraftmaschine mit einem Abgasturbolader (13) und zumindest einem im Strömungsweg (14) zum Einlapkanal angeordneten Wärmetauscher (17), sowie mit einem Abgasrückführventil (19) in einer von der Abgasleitung (8; 8') abzweigenden und in den Strömungsweg (14; 15') zum Einlaßkanal einmündenden Abgasrückführleitung (18), auch im Hochlastbereich zur Stickoxidreduzierung gekühltes Abgas ohne Funktionseinschränkung von Bauteilen in Folge Verschmutzung rückführen zu können, wird vorgeschlagen, daß in Strömungsrichtung vor dem zur Kühlung des rückgeführten Abgases vorgesehenen Wärmetauscher (17; 22) eine vom rückgeführten Abgas durchströmte Abgasreinigungseinrichtung (21; 21a) angeordnet ist.

## Beschreibung

Die Erfindung bezieht sich auf eine Brennkraftmaschine mit einem Abgasturbolader und zumindest einem im Strömungsweg zum Einlaßkanal angeordneten Wärmetauscher, sowie mit einem Abgasrückführventil in einer von der Abgasleitung abzweigenden und in den Strömungsweg zum Einlaßkanal einmündenden Abgasrückführleitung.

Zur Erfüllung der zu erwartenden strengen gesetzlichen Bestimmungen bezüglich der Stickoxid-Emissionen werden die Entwickler und Hersteller von Nutzfahrzeug-Dieselmotoren künftig gezwungen sein, die Stickoxid-Emissionen der Motoren drastisch zu reduzieren.

Bei den für Nutzfahrzeug-Dieselmotoren gesetzlich vorgeschriebenen Testverfahren (Europa 13-Stufen-Test; USA Heavy Duty Transient Cycle) werden ca. 70 bis 80% der Stickoxide im Hochlastbereich erzeugt. Die bisher im unteren Lastbereich zur Reduktion des Stickoxids mit Erfolg praktizierte Abgasrückführung ohne Abgasvorbehandlung kann im Hochlastbereich nicht eingesetzt werden, da einerseits mit einem starken Anstieg der Rauch- bzw. Partikelemission und mit einer Verbrauchszunahme zu rechnen ist. Außerdem ist durch die Erweiterung der Abgasrückführung auf den Hochlastbereich die Dauerhaltbarkeit durch erhöhten Verschleiß beeinträchtigt. Der erhöhte Verschleiß tritt dadurch auf, da es bei der Rückführung von ungereinigtem Dieselabgas zu einem Eintrag von Feststoffpartikeln über den Ölfilm der Zylinderwand in das Motoröl kommt. Ferner ist zu erwarten, daß durch die Abgasrückführung in den Hochlastpunkten die Ladelufttemperatur stark erhöht würde, was einen NOₓ-fördernden Einfluß auf die Verbrennung hätte, wodurch die NOₓ-Senkung durch die Abgasrückführung stark beeinträchtigt würde.

Ein Großteil heutiger Nutzfahrzeug-Motoren ist, wie eingangs angegeben, zur Verbrauchs- und NOₓ-Senkung mit einem Wärmetauscher zur Ladeluftkühlung versehen. Eine Abgasrückführung im Hochlastbereich ist nur dann sinnvoll, wenn das rückgeführte Abgas ausreichend abgekühlt wird. Gegen ein Hinzufügen des gekühlten Abgases zum Ansaugluftstrom noch vor dem Ladeluftkühler spricht der Umstand, daß die im rückgeführten Abgas konventioneller Brennkraftmaschinen enthaltenen Partikel durch Ablagerung zur Verschmutzung und damit zur Unwirksamkeit bzw. Verstopfung des Ladeluftkühlers führen würden. Derartige Abgasrückführanlagen mit den genannten Nachteilen sind etwa aus der DE-OS 28 55 687 oder der DE-OS 23 26 206 bekannt.

Aus der US-PS 5 131 229 ist eine Brennkraftmaschine der eingangs genannten Art bekannt, bei der in den die Abgasrückführleitung zwischen Abgas- und Ladeluftrohr durchströmenden Abgasteilstrom im betriebswarmen Zustand und Hochlastbereich der Brennkraftmaschine Wasser eingespritzt wird. Dadurch wird die eingespritzte Wassermenge verdampft und kühlt durch die entzogene Verdampfungswärme den Abgasteilstrom, wodurch eine gute stickoxidsenkende Wirkung erreicht wird. Der Nachteil aller Wassereinspritzsysteme ist, daß zusätzlich Einrichtungen zur Speicherung, Förderung und Regelung der mitunter recht beträchtlichen Wassermengen erforderlich sind. Bei tiefen Temperaturen müssen darüberhinaus noch Maßnahmen gegen Einfrieren getroffen werden. Wassereinspritzsysteme für Dieselmotoren sind daher recht wartungsaufwendig und haben einen negativen Einfluß auf Fahrzeuggewicht und Baugröße.

Der Erfindung liegt die Aufgabe zugrunde, bei einer Brennkraftmaschine der eingangs genannten Art die oben angegebenen Nachteile zu vermeiden und bei Anwendung einer Abgasrückführung im Hochlastbereich zur Reduzierung der Stickoxid-Emissionen des Motors die Ladelufttemperaturerhöhung möglichst gering zu halten, und dabei Fahrzeuggewicht und -volumen und Wartungsaufwand möglichst wenig zu erhöhen.

Erfindungsgemäß wird dies dadurch gelöst, daß in Strömungsrichtung vor dem zur Kühlung des rückgeführten Abgases vorgesehenen Wärmetauscher eine vom rückgeführten Abgas durchströmte Abgasreinigungseinrichtung angeordnet ist. Betriebsstörende Ablagerungen von Verunreinigungen im zur Kühlung des rückgeführten Abgases vorgesehenen Wärmetauscher können damit drastisch verringert werden. Die gekühlte Abgasrückführung hat neben der deutlichen Stickoxidreduzierung die Vorteile eines besseren Kraftstoffverbrauches und einer geringeren Partikelemission, vor allem ab 30 % Last.

In einer kostengünstigen und platzsparenden Ausführungsvariante ist vorgesehen, daß die Abgasreinigungseinrichtung und/oder der Wärmetauscher zur Kühlung des rückgeführten Abgases in der Rückführleitung angeordnet ist. Die Abgasreinigungseinrichtung bzw. der Wärmetauscher zur Kühlung des rückgeführten Abgases braucht hier nur auf den relativ kleinen rückzuführenden Abgasvolumenstrom ausgelegt werden. Genauso ist es aber auch möglich, die Abgasreinigungseinrichtung in der Abgasleitung in Strömungsrichtung vor der abzweigenden Abgasrückführleitung anzuordnen und somit den gesamten Abgasstrom zu reinigen.

In einer weiteren vorteilhaften Ausführungsvariante der Erfindung ist vorgesehen, daß der Wärmetauscher zur Kühlung des rückgeführten Abgases in der Ladeluftleitung angeordnet ist und gleichzeitig auch zur Kühlung der Ladeluft dient. Der Wärmetauscher muß dabei entsprechend groß dimensioniert und korrosionsbeständig ausgeführt sein. Dies hat den Vorteil, daß ein Bauteil eingespart werden kann.

Vorzugsweise ist vorgesehen, daß die Abgasreinigungseinrichtung als Oxidationskatalysator oder als, vorzugsweise regenerierbarer, Partikelfilter ausgebildet ist. Schädliche Ablagerungen im Strömungsweg zum Brennraum können dadurch verringert werden. Ein Verfahren zur Oxidation von in Rußfiltersystem abgelagerten Partikeln ist beispielsweise aus der DE-OS 35 38 155 bekannt. Weiters wird in der DE-OS 36 05 255 ein Verfahren zur Regeneration von Abgaspartikelfiltersystemen vorgestellt.

Vorzugsweise ist vorgesehen, daß der Strömungsweg zu dem der Abgasreinigungseinrichtung nachgeschalteten Wärmetauscher durch eine Bypassleitung umgehbar ist. Besonders in der Kaltlaufphase des Motors wird dadurch ein zu starkes Abkühlen der Ladeluft vermieden. Die den Wärmetauscher umgehende Bypassleitung kann durch ein Umschaltorgan temperaturabhängig aktiviert werden.

In einer einfachen Ausführungsvariante ist vorgesehen, daß die Abgasrückführleitung in Strömungsrichtung vor der Abgasturbine des Turboladers von der Hochdruck-Abgasleitung abzweigt und nach dem Luftverdichter des Turboladers in die Ladeluftleitung einmündet. Der Luftverdichter des Turboladers wird dabei von der Abgasrückführung nicht betroffen. Die Menge des rückgeführten Abgases ist dabei starkt abhängig von der Druckdifferenz zwischen der Hochdruck-Abgasleitung und der Ladeluftleitung.

Höhere Mengen an rückgeführtem Abgas können erreicht werden, wenn die Abgasrückführung in Strömungsrichtung vor der Abgasturbine des Turboladers von der Hochdruck-Abgasleitung abzweigt und vor dem Luftverdichter des Turboladers in die Ansaugleitung einmündet. Die Druckdifferenz zwischen Abgasleitung und Ansaugleitung ist immer groß genug um in jedem Betriebszustand eine Abgasrückführung zu ermöglichen.

Zur Erzielung hoher Abgasrückführraten kann auch vorgesehen sein, daß die Abgasrückführleitung in Strömungsrichtung nach der Abgasturbine des Turboladers von der Niederdruck-Abgasleitung abzweigt und vor dem Luftverdichter des Turboladers in die Ansaugleitung einmündet. Dies hat den Vorteil, daß die Abgasturbine des Turboladers von der vollen Abgasmenge durchströmt wird. Der Druck in der Abgasleitung nach der Abgasturbine ist stets größer als der Druck im Ansaugrohr vor dem Luftverdichter, sodaß es auch bei dieser Ausführungsvariante leichter ist, in jedem Arbeitspunkt die Rückführung der gewünschten Abgasmenge zu erzielen.

Die Erfindung wird anhand der in der Zeichnung schematisch dargestellten Ausführungsbeispiele näher erläutert. Es zeigen:
- Fig. 1 und 2: erfindungsmäße Ausführungen einer Hochdruck-Abgasrückführung,
- Fig. 3: eine Abgasrückführung von der Hochdruck-Abgasleitung zur Niederdruck-Ansaugleitung,
- Fig. 4 und 5: erfindungsgemäße Ausführungsformen einer Niederdruck-Abgasrückführung.

Gleichartige Bauteile sind in den Figuren mit dem selben Bezugszeichen versehen.

Die Brennkraftmaschine, generell mit 1 bezeichnet, weist einen Zylinder 2, einen Zylinderkopf 3, einen hin- und hergehenden Kolben 4 sowie ein Einlaßventil 5 und ein Auslaßventil 6 auf. Das an das Auslaßventil 6 anschließende Abgasrohr 7 ist mit dem Spiral-Gehäuse 8 der Abgasturbine 9 strömungsverbunden. Das Laufrad 9' der Abgasturbine 9 ist mit dem Laufrad 10' des Luftverdichters 10 über die Welle 11 drehfest verbunden. Das Spiral-Gehäuse des Luftverdichters 10 ist mit 12, der aus Abgasturbine 9 und Luftverdichter 10 gebildete Turbolader ist generell mit 13 bezeichnet. In das Spiral-Gehäuse 12 des Luftverdichters 10 strömt über das Ansaugrohr 15' axial Frischluft ein; die verdichtete Ladeluft strömt aus diesem Spiral-Gehäuse 12 über das Ladeluftrohr 15 und den Sammler 16 zum Einlaßventil 5, wobei sie den Ladeluftkühler 17 passiert. Der gesamte Strang der Luftleitung ist mit 14 bezeichnet.

Zwischen der Abzweigstelle 18' der Abgasleitung 7 und der Mündungsstelle 18'' der Luftleitung 14 ist eine Abgasrückführleitung 18 vorgesehen, über welche, gesteuert durch das hier nicht näher zu beschreibende, beispielsweise elektropneumatisch betriebene, Abgasrückführventil 19, ein Abgasteilstrom von der Abgasleitung 7 zur Luftleitung 14 in Richtung des Pfeiles 20 überströmen kann. In die Abgasrückführleitung 18 ist, in Strömungsrichtung des Abgasteilstromes, hinter dem Abgasrückführventil 19 eine Abgasreinigungseinrichtung 21, vorzugsweise regenerierbarer Partikelfilter 21a oder ein Oxidationskatalysator 21b angeordnet. Ab der Mündungsstelle 18' der Abgasrückführleitung 18 in die Luftleitung 14 wird die Luftleitung 14 bei betriebswarmem Zustand und Hochlastbereich der Brennkraftmaschine von einem Gemisch aus Luft und Abgas durchströmt, wie dies zeichnerisch durch Symbole veranschaulicht ist.

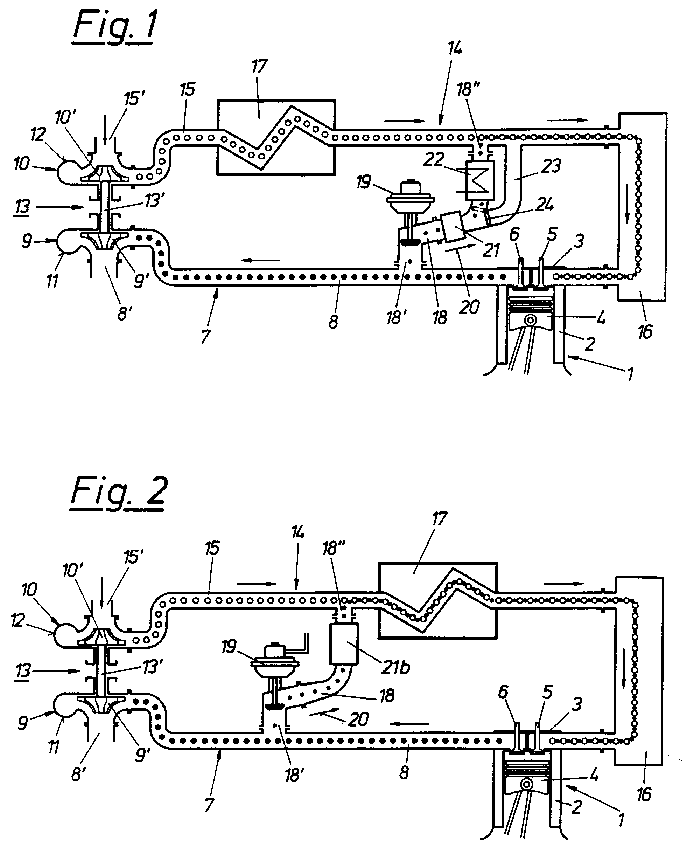

Bei der Ausführungsvariante einer Abgasrückführung zwischen der Hochdruck-Abgasleitung 8 und der Ladeluftleitung 15 nach Figur 1 ist der Abgasreinigungseinrichtung 21 in der Abgasrückführleitung 18 ein als Wärmetauscher ausgebildeter Abgasrückführkühler 22 nachgeschaltet. In der strichliert eingezeichneten Stellung des Umschaltorganes 24 kann der rückgeführte Abgasstrom anstatt zum Abgasrückführkühler 22 in eine in das Ladeluftrohr 15 mündende Bypassleitung 23 umgeleitet werden. Statt, wie in Figur 1, das rückgeführte Abgas durch den Ladekühler 17 in die Ladeluftleitung 15 einströmen zu lassen, kann das rückgeführte und gereinigte Abgas auch vor dem Ladeluftkühler 17 eingeleitet werden.

In Figur 2 übernimmt der entsprechend dimensionierte Ladeluftkühler 17 auch die Kühlung des rückgeführten Abgases, wodurch ein seperater Abgasrückführkühler 22 entfällt.

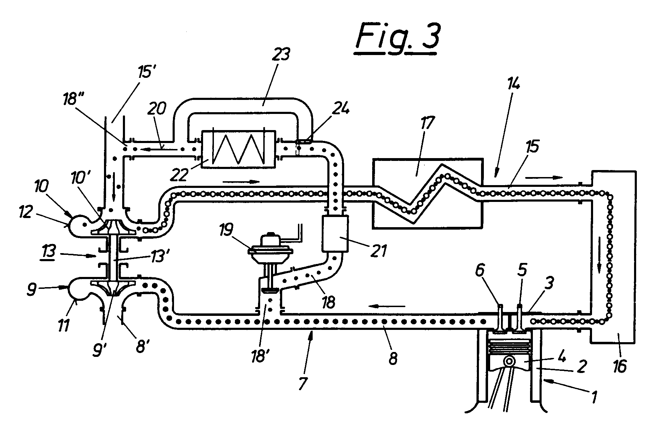

In Figur 3 zweigt die Verbindungsleitung 18 von der Hochdruck-Abgasleitung 8 ab und mündet in die Ansaugleitung 15' in Strömungsrichtung vor dem Luftverdichter 10 des Turboladers 13. Wegen der hohen Druckdifferenzen zwischen der Hochdruck-Abgasleitung 18 und der Ansaugleitung 15' sind hier besonder hohe Mengen an rückgeführtem Abgas möglich. Durch die vorzugsweise als Partikelfilter 21a ausgeführte Abgasreinigungseinrichtung 21 bleibt das Laufrad 10' des Luftverdichters 10 vor betriebsstörenden Verunreinigungen verschont.

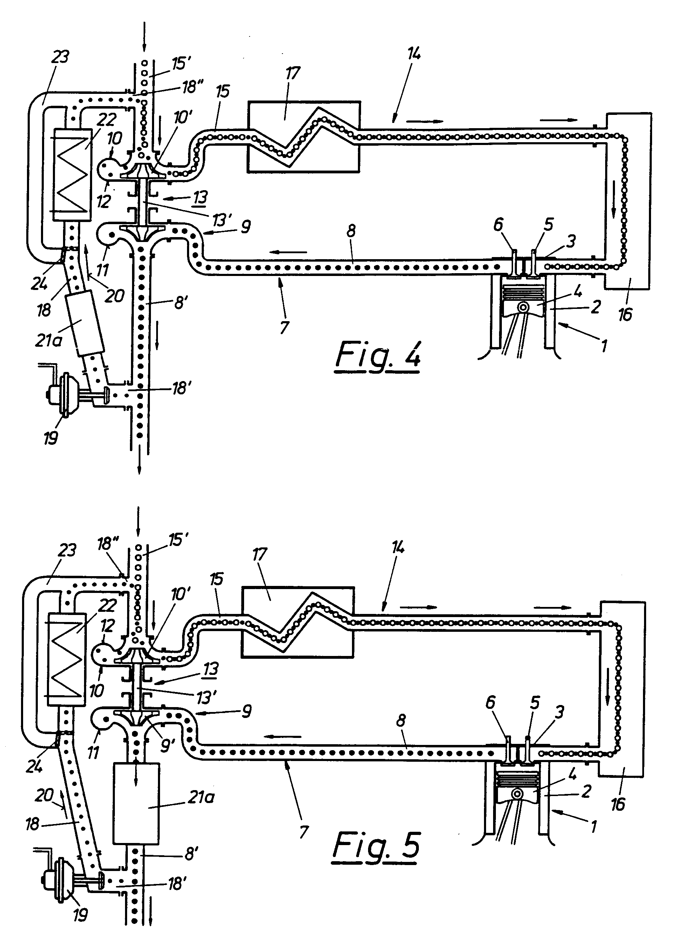

Eine von der Druckdifferenz zwischen Hochdruck-Abgasleitung 8 und Luftleitung 14 unabhängige Abgasrückführung wird auch ermöglicht, wenn die Abgasrückführleitung 18 von der Niederdruck-Abgasleitung 8' nach der Abgasturbine 9 abzweigt und in die Ansaugleitung 15' vor dem Luftverdichter 10 einmündet, wie dies in den Figuren 4 und 5 dargestellt ist. In der Ausführungsvariante nach Figur 4 ist in der Abgasrückführleitung 18 vor dem durch die Bypassleitung 13 umgehbaren Abgasrückführkühler 22 eine, vorzugsweise als regenerierbarer Partikelfilter 21a ausgebildete, Abgasreinigungeinrichtung 21 vorgesehen. Wie in Figur 5 ersichtlich, kann statt dessen auch ein entsprechend dimensionierter Partikelfilter 21a in der Niederdruck-Abgasleitung 8' zwischen der Abgasturbine 9 und der Abzweigstelle 18' vorgesehen sein.

## Patentansprüche

1. Brennkraftmaschine mit einem Abgasturbolader (13) und zumindest einem im Strömungsweg (14) zum Einlaßkanal angeordneten Wärmetauscher (17), sowie mit einem Abgasrückführventil (19) in einer von der Abgasleitung (8; 8') abzweigenden und in den Strömungsweg (14; 15') zum Einlaßkanal einmündenden Abgasrückführleitung (18), **dadurch gekennzeichnet**, daß in Strömungsrichtung vor dem zur Kühlung des rückgeführten Abgases vorgesehenen Wärmetauscher (17; 22) eine vom rückgeführten Abgas durchströmte Abgasreinigungseinrichtung (21; 21a) angeordnet ist.

2. Brennkraftmaschine nach Anspruch 1, **dadurch gekennzeichnet**, daß die Abgasreinigungseinrichtung (21) und/oder der Wärmetauscher (22) zur Kühlung des rückgeführten Abgases in der Rückführleitung (18) angeordnet ist.

3. Brennkraftmaschine nach Anspruch 1, **dadurch gekennzeichnet**, daß der Wärmetauscher (22) zur Kühlung des rückgeführten Abgases in der Ladeluftleitung (15) angeordnet ist und gleichzeitig auch zur Kühlung der Ladeluft dient.

4. Brennkraftmaschine nach Anspruch 1 bis 3, **dadurch gekennzeichnet**, daß die Abgasreinigungseinrichtung (21) als Oxidationskatalysator (21b) oder als, vorzugsweise regenerierbarer, Partikelfilter (21a) ausgebildet ist.

5. Brennkraftmaschine nach einem der Ansprüche 1 bis 4, **dadurch gekennzeichnet**, daß der Strömungsweg zu dem der Abgasreinigungseinrichtung (21) nachgeschalteten Wärmetauscher (22) durch eine Bypassleitung (23) umgehbar ist.

6. Brennkraftmaschine nach einem der Ansprüche 1 bis 5, **dadurch gekennzeichnet**, daß die Abgasrückführleitung (18) in Strömungsrichtung vor der Abgasturbine (9) des Turboladers (13) von der Hochdruck-Abgasleitung (8) abzweigt und nach dem Luftverdichter (10) des Turboladers (13) in die Ladeluftleitung (15) einmündet.

7. Brennkraftmaschine nach einem der Ansprüche 1 bis 5, **dadurch gekennzeichnet**, daß die Abgasrückführung (18) in Strömungsrichtung vor der Abgasturbine (9) des Turboladers (13) von der Hochdruck-Abgasleitung (8) abzweigt und vor dem Luftverdichter (10) des Turboladers (13) in die Ansaugleitung (15') einmündet.

8. Brennkraftmaschine nach einem der Ansprüche 1 bis 5, **dadurch gekennzeichnet**, daß die Abgasrückführleitung (18) in Strömungsrichtung nach der Abgasturbine (9) des Turboladers (13) von der Niederdruck-Abgasleitung (8') abzweigt und vor dem Luftverdichter (10) des Turboladers (13) in die Ansaugleitung (15') einmündet.
